(19) Europäisches Patentamt
European Patent Office
Office européen des brevets

(11) EP 4 380 021 A1

(12) EUROPEAN PATENT APPLICATION

(43) Date of publication:
05.06.2024 Bulletin 2024/23

(21) Application number: 22210856.5

(22) Date of filing: 01.12.2022

(51) International Patent Classification (IPC):
H02K 44/04 (2006.01)

(52) Cooperative Patent Classification (CPC):
H02K 44/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Excillum AB
164 40 Kista (SE)

(72) Inventor: LUNDSTRÖM, Ulf
164 40 KISTA (SE)

(74) Representative: AWA Sweden AB
Box 45086
104 30 Stockholm (SE)

(54) **CURRENT-PROTECTED ELECTROMAGNETIC PUMP ARRANGEMENT AND METHOD**

(57) An electromagnetic pump arrangement configured for circulating a liquid metal is disclosed. The arrangement comprises an electromagnetic pump comprising an inlet and an outlet; a conduit forming at least part of a path for the liquid metal to flow from the outlet to the inlet; a power supply configured to provide a driving voltage to the electromagnetic pump between the inlet and the outlet; and a current limiter configured to limit electrical current flowing from the outlet to the inlet through the conduit and the liquid metal. A corresponding method for circulating liquid metal is also disclosed, as well as a system comprising such electromagnetic pump arrangement.

Fig. 1a

**Description**

<u>Technical field</u>

The present disclosure relates to arrangements and methods in connection with electromagnetic pumps.

<u>Background</u>

Electromagnetic pumps are known in the art. Such pumps work according to the principle that if an electric current is applied upon an electrically conductive liquid flowing in a conduit through a magnetic field then a force will be exerted on the liquid, thereby producing a pumping action along the conduit.

The raising of the pressure in the electrically conductive liquid is achieved by the force resulting from the interaction between the magnetic field and the electric current flowing through the liquid. The direction of the force is generally perpendicular to the plane comprising both the direction of the electric current and the magnetic field, and by orienting this plane substantially perpendicular to the length direction of the conduit, a flow of the liquid may thus be induced through the conduit. The magnetic force on a current-carrying conductor may generally be expressed as

$$\mathrm{d}\vec{F} = I\mathrm{d}\vec{l} \times \vec{B} \qquad (1)$$

In other words, the generated force is perpendicular to both the magnetic field and the electric current and only the components of the field and the current perpendicular to each other contribute to the generated force. The magnetic force, and hence the flow of the liquid, is affected by the strength of the magnetic field, the current flowing through the liquid, and the length of the conduit over which the magnetic force acts. Further, the strength of the magnetic force will be dependent on the angle that the magnetic field makes with the direction of the electric current. Preferably, the magnetic field is perpendicular to the direction of the electric current in order to provide a maximum magnetic force. The magnetic field may, for example, be arranged at an angle of between 70 to 110 degrees with respect to the direction of the electric current. Furthermore, the pressure provided by the electromagnetic pump may be proportional to a number of conduit sections arranged in the electromagnetic pump. The magnetic field may typically be realized with the aid of one or more permanent magnets whereas the current may be supplied from a direct current power supply.

For high-pressure electromagnetic pumps, it may be required to apply a high electrical current for achieving the desired pumping action. For example, the current may be as high as several hundreds of amperes. The present disclosure is directed to solving one or more problems that may then arise. Corresponding problems may also arise at lower electrical currents, and the teachings herein are equally applicable also for such lower-current electromagnetic pumps.

<u>Summary</u>

One problem that has been identified, and that the technology disclosed herein intends to address, is that the conductive liquid being pumped by the electromagnetic pump may constitute an electrical loop between the pump outlet and the pump inlet. Hence, an electrical current applied across the electromagnetic pump will experience such electrical loop as a parasitic circuit connected in parallel to the pump. A non-negligible amount of electrical current (i.e. a leakage current) may then flow through such loop between the pump outlet and the pump inlet, and cause various problems both directly and indirectly (e.g. due to electromagnetic fields induced by the current).

In particular, when such electromagnetic pump is used for pumping liquid metal in a liquid metal jet X-ray source, a leakage current of this kind may cause undesirable heating, may adversely affect a nozzle used for forming the liquid jet, and may induce an electromagnetic field that adversely affects an electron beam used for generating the X-ray radiation.

Therefore, it is a general object of the present disclosure to provide a solution that mitigates problems relating to such leakage current along a path outside the pump between the pump outlet and the pump inlet.

Common to many of the solutions proposed herein is that the leakage current is confined to regions or portions along the path of the conductive liquid where heating and/or induced electromagnetic fields do not cause any significant problems.

Various other solutions which increase the resistance in the parallel circuit are proposed. Common to the solutions proposed herein is that some type of resistance-increasing or current limiting measure is applied to the parallel circuit.

Further, solutions are proposed in which the parallel circuit is connected to ground potential at one or more locations to drastically reduce or eliminate any remaining leakage current from reaching some portions of the flow path (that may be particularly sensitive to the presence of electric current).

Common goals of all proposed solutions are to provide for a low and constant leakage current. Since a varying leakage current corresponds to a varying current through the electromagnetic pump this would also imply a varying pump performance.

Brief description of the drawings

In the following detailed description, reference is made to the accompanying drawings, on which:

Fig. 1a schematically shows a first implementation according to the principles disclosed herein;
Fig. 1b schematically shows a variant of the first implementation;
Fig. 2 schematically shows a second implementation according to the principles disclosed herein;
Fig. 3 schematically shows a third implementation according to the principles disclosed herein;
Fig. 4 schematically shows a fourth implementation according to the principles disclosed herein; and
Fig. 5 outlines a method according to the principles disclosed herein.

In the figures, corresponding parts are designated corresponding reference numerals throughout.

Detailed description

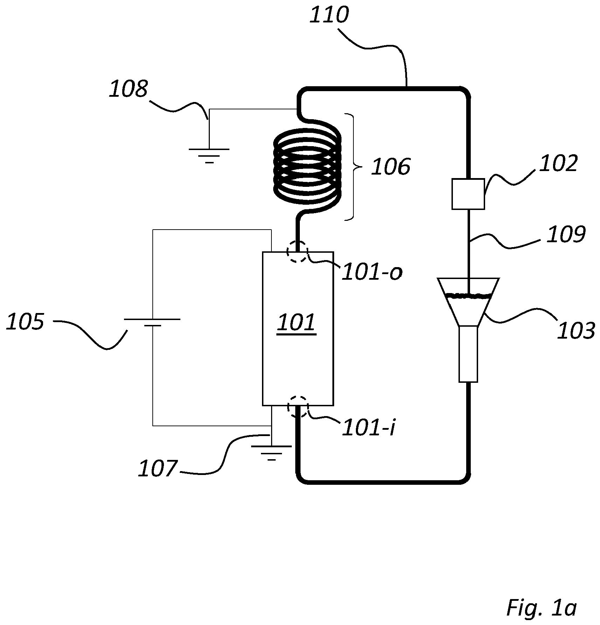

A first example of an implementation of the teachings herein is schematically shown in Fig. 1a. An electromagnetic pump 101 having an inlet 101-i and an outlet 101-o is provided to supply liquid metal at a high pressure (> 50 bar) to a nozzle 102. A jet 109 of liquid metal is ejected from the nozzle 102 and collected at a receiver 103. The receiver is connected to the inlet 101-i of the electromagnetic pump 101 so that the liquid metal may circulate through the system. In some implementations, a pre-pump may be provided between the receiver 103 and the inlet 101-i to assist in circulating the liquid metal and/or to provide a suitable inlet pressure for the main pump 101. Current is drawn through the electromagnetic pump by a direct current power supply 105. The liquid metal is circulated using a conduit 110 that connects the pump outlet 101-o to the nozzle 102. As will be appreciated, a similar pipe connects the receiver 103 to the pump inlet 101-i. To prevent current from also flowing through the nozzle 102, the jet 109, and the receiver 103 in a circuit parallel with the pump 101, a current limiter between the outlet from the pump 101 and the nozzle 102 is provided in the form of a conduit extension of sufficient length as shown at reference numeral 106. The conduit extension 106 is arranged so as to have an electrical resistance that is large compared to the resistance over the pump while at the same time having a small flow resistance. One way to accomplish this is to make the conduit extension 106 to have a sufficient length, as illustrated in Fig. 1a by a coiled section of the conduit. Furthermore, the conduit extension 106 may be provided with an insulating coating, or be fixed with insulating clamps (not shown), to protect from short circuits which may affect the amount pf leakage current and thus the pump performance. An alternative may be to make the conduit extension from an electrically insulating material. In the latter case, the length of the conduit extension may be shorter that in the former to obtain the same current limiting effect since in this case only the liquid metal contributes to the electrical conduction. In this way, the required voltage can be maintained across the pump 101 in order to draw the electric current therethrough to pump the liquid metal. At the same time, flow of leakage electrical current through the nozzle 102, jet 109, and receiver 103 can be greatly reduced. As shown in the figure, the pump arrangement may also be connected to ground potential at the inlet 101-i to the pump as shown at reference numeral 107 and at the end of the conduit extension 106 as shown at reference numeral 108. Thus, points 107 and 108 will effectively be short circuited and negligible electrical current will flow through nozzle, jet, and jet receiver.

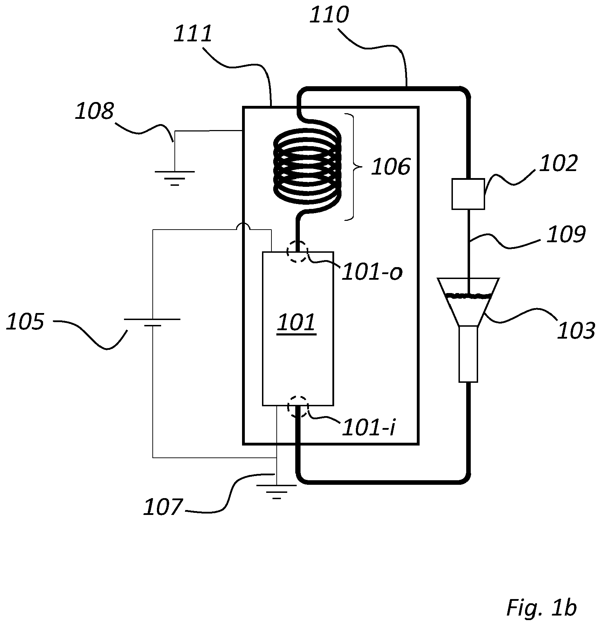

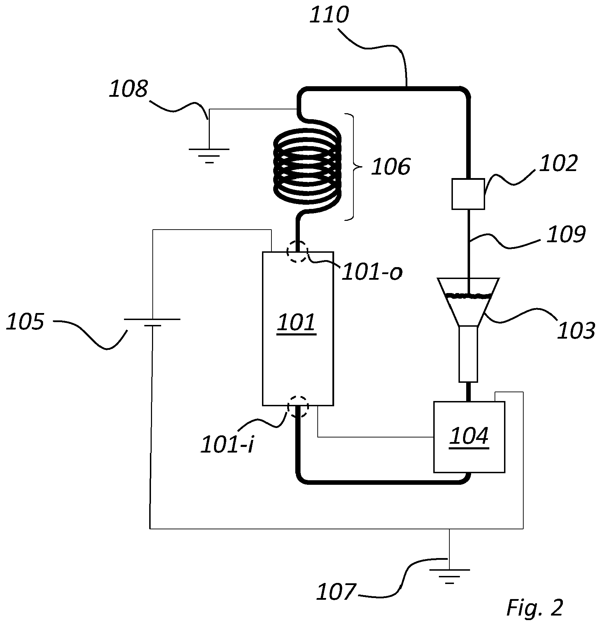

Conveniently, the pump 101 and the conduit extension 106 may be placed inside a box or housing 111, the walls of which are connected to electrical ground, as illustrated in Fig. 1b. The conduit 110 is then preferably electrically connected to the box 111 where the conduit 110 exits and enters the box 111, so that ground points are provided for the conduit. With such box, improved control of electrical currents, and thereby electrical fields, caused by the electromagnetic pump outside of the box is obtained. In principle, any electrical influence from the pump 101 outside of the box 111 may thereby be eliminated. Furthermore, the conduit 110 may be anchored within the box with insulating clamps (not shown) to prevent the possibility of short circuiting between different parts of the conduit or between the conduit and the box, thus ensuring stable pump performance. Although not shown in Figs. 2-4, such box may optionally be provided also in those implementations.

Another implementation is schematically shown in Fig. 2. This implementation is similar to that shown in Fig. 1a, except that an electromagnetic pre-pump 104 is included. The collected liquid metal is pumped to the electromagnetic pump 101 by the pre-pump 104. The purpose of the pre-pump is to raise the inlet pressure to the main electromagnetic pump. In this case, both the pre-pump 104 and the main pump 101 are fed by a common direct current power supply 105. This means that the nozzle 102, the jet 109, and the receiver 103 are protected from electrical current by a first ground point 108 at the end of the conduit extension 106 and a second ground point 107 at the inlet to the pre-pump.

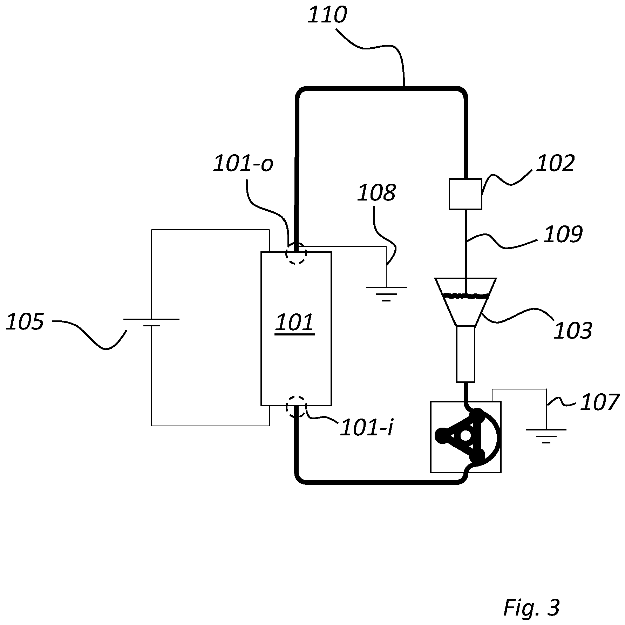

Alternative embodiments include providing electrical insulation and/or interruption of liquid metal flow, or at least a reduction in the cross-sectional area through which the liquid metal flows, in pre-pump 104. This may be achieved e.g., by implementing the pre-pump 104 as an impeller in the flow path, by having a peristaltic pump as pre-pump, by having a gear pump as pre-pump or the like. In all these cases, electrically insulating materials are needed, e.g. polymers. One example implementation is schematically shown in Fig. 3, where the pre-pump is implemented as a peristaltic pump made from electrically insulating material. Thereby, the electrical circuit between the outlet 101-o and the inlet 101-i of the main pump 101 is effectively broken, or at least severely restricted, so that any flow of electrical current through the nozzle 102, the jet 109, and the receiver 103 is prevented or at least greatly reduced. Also in this embodiment, the arrangement may be grounded as indicated by numerals 107 at the inlet of the pre-pump and 108 at the outlet of the electromagnetic pump 101. By connecting the arrangement to ground potential in this way, an electrical shortcut is created between the outlet 101-o of the electromagnetic pump 101 and the inlet of the pre-pump, thus making the current flowing through the nozzle, jet, and receiver negligible. A potential draw back with this type of solutions, however, is that moving parts are introduced in the flow path, which is typically what the use of electromagnetic pumps is intended to avoid.

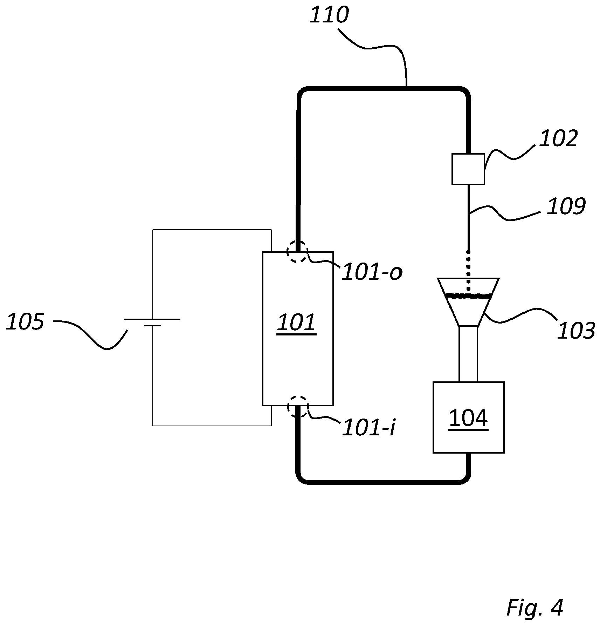

The jet 109 may in itself be used as a current limiter provided that sufficient electrical insulation is in place between the nozzle 102 and the receiver 103. Having the nozzle 102 and the receiver 103 at different electric potential will create an electric field that may require some compensation of an electron beam intended to impact the jet. Further alternatives include generating the jet 109 such that it breaks up into droplets, or at least separates from a continuous flow, before it reaches the receiver 103, as schematically shown in Fig. 4. Jet break-up may be effected by introducing a small disturbance in the liquid metal flow, e.g. by oscillating the nozzle 102. Such jet break-up into droplets will cause an interruption in electrical conduction, thus effectively acting as a current limiter in the parallel path from the outlet 101-o to the inlet 101-i. However, a jet that breaks up into droplets will in many cases entail creation of small so called satellite droplets. This may in turn contribute to the level of debris present around the jet 109. The receiver 103 may also need to be adapted in some way to receive droplets instead of a continuous jet to avoid spatter of liquid metal that could disturb the operation of the apparatus where the pump arrangement is employed.

Another option is to interrupt the flow between the receiver 103 and the pre-pump 104 by introducing a plurality of openings through which the liquid metal is made to drip under gravity before reaching the pre-pump 104. In this way, the individual droplets will have a low velocity and the likelihood of creating deleterious debris will be correspondingly low, while the intended current-limiting effect is still provided. The receiver 103 and the pre-pump 104 need to be electrically insulated from each other to prevent electrical current from bypassing the flow interruption.

For an implementation where the electromagnetic pump comprises a (fluid-carrying) pipe or tube wound around a central member (e.g. an iron core of a magnetic circuit included in the pump) and where the current limiter is embodied as an extension of the same pipe, some observations regarding the length of the extension may be illustrative. To achieve the intended function, the flow resistance for the fluid through the pipe extension should be small, otherwise the benefits obtained could be outweighed by the detrimental effects of the increased flow resistance. A reasonable engineering approach could then be to make the flow resistance through the pipe extension at least ten times smaller than the flow resistance through the pump itself. Furthermore, the electrical resistance over the extension should be large in comparison to that of the pump to ensure that the current flows primarily through the pump rather than through the pipe extension. Applying the same engineering approach leads to a rule of thumb that the electrical resistance over the extension should be at least ten times that over the pump. Since the pump and the extension are made from the same pipe, the flow resistance relation will be governed by the length of the extension and the length of the pipe forming the pump. The length of the pipe forming the pump is just the circumference of the central member around which the pipe is wound times the number of turns the pipe is wound.

In any implementation, the current limiter is preferably structured and arranged such that a power loss generated in the current limiter is less than 10% of a power supplied to the electromagnetic pump. Further, in any implementation, the current limiter is preferably structured and arranged such that a pressure drop over the current limiter is less than 10% of a pressure generated by the electromagnetic pump.

The electrical resistance of the pump may, in a simple model, be seen as a cylindrical shell where the thickness of the shell is the outer diameter of the pipe and the length of the shell is the outer diameter times the number of turns. The required number of turns will be proportional to desired pressure at the pump outlet, as understood from equation (1) above. The electrical resistance of the pipe extension may be seen as that of a cylinder. As readily appreciated, a shorter pipe extension leads to a smaller increase in flow resistance while a longer pipe extension leads to a larger increase in electrical resistance. A reasonable simplification that can be made for this rule-of-thumb discussion is that the resistivities of the pipe material and of the liquid metal are substantially the same. In general, however, these resistivities of course differ but the core of this discussion still holds.

From the above, it can be understood that if the diameter of the central member is small then the length of the pipe forming the pump and thus the flow resistance of the pump will, for a given pipe diameter, be correspondingly small and the length of the extension should thus be kept small in order not to have a too large flow resistance. On the other hand, the electrical resistance of the pump increases when the diameter of the central member decreases whereas the electrical resistance of the extension reduces as the length thereof is decreased. Thus, the diameter of the central member is preferably maintained above a limiting value to enable a choice of length of the pipe extension that fulfils both design criteria, i.e. sufficiently large electrical resistance and sufficiently low flow resistance.

The electrical resistance over the pump can be expressed as

$$R_{electric}^{pump} = \frac{\rho \emptyset_{pipe} N}{\pi \emptyset_{core} \emptyset_{pipe}} = \frac{\rho N}{\pi \emptyset_{core}} \qquad (2)$$

where p is the resistivity (assumed equal in pipe material and liquid metal), N is the number of turns, $\emptyset_{pipe}$ is the outer diameter of the pipe, and $\emptyset_{core}$ is the diameter of the central member (core). The flow resistance through the pump may be written as

$$R_{flow}^{pump} = f(\emptyset_i, \eta) \pi \emptyset_{core} N \qquad (3)$$

where $f(\emptyset_i, \eta)$ is a function of the inner diameter of the pipe $\emptyset_i$ and the viscosity of the liquid metal $\eta$. For the pipe extension, assumed having a length $l$, we may write

$$R_{electric}^{extension} = \frac{4l\rho}{\pi \emptyset_{pipe}^2} \qquad (4)$$

and

$$R_{flow}^{extension} = f(\emptyset_i, \eta) l \qquad (5)$$

The two design criteria may now be written as

$$R_{electric}^{extension} > 10 \cdot R_{electric}^{pump} \qquad (6)$$

$$\rightarrow \frac{4l\rho}{\pi \emptyset_{pipe}^2} > 10 \frac{\rho N}{\pi \emptyset_{core}} \qquad (7)$$

$$\rightarrow l > \frac{10 N \emptyset_{pipe}^2}{4 \emptyset_{core}} \qquad (8)$$

and

$$R_{flow}^{extension} < \frac{R_{flow}^{pump}}{10} \qquad (9)$$

$$\rightarrow f(\emptyset_i, \eta) l < \frac{f(\emptyset_i, \eta) \pi \emptyset_{core} N}{10} \qquad (10)$$

$$\rightarrow l < \frac{\pi \emptyset_{core} N}{10} \qquad (11)$$

For these two criteria to be fulfilled at the same time it is required that

$$\frac{\pi\emptyset_{core}N}{10} > \frac{10N\emptyset_{pipe}^2}{4\emptyset_{core}} \qquad (12)$$

$$\emptyset_{core} > \sqrt{\frac{100\emptyset_{pipe}^2}{4\pi}} \approx 2.8\emptyset_{pipe} \qquad (13)$$

Thus, as a rule of thumb, there is a lower limit for the diameter of the central member (core diameter) for which the two design criteria can be met. With the model presented above, the lower limit of the diameter of the central member is about 2.8 times the outer diameter of the pipe.

Hence, in accordance with the principles disclosed herein, the above relation between the diameter of the central member (the core diameter) and the outer diameter of the pipe is taken into account as a design parameter for an electromagnetic pump arrangement. There is thus provided an electromagnetic pump arrangement configured for circulating a liquid metal, the arrangement comprising an electromagnetic pump, the electromagnetic pump having an inlet and an outlet, a core with a first diameter, a metal tube with a second diameter, wherein the metal tube is wound around the core a number of windings and forms a path for the liquid metal from the inlet to the outlet. The electromagnetic pump arrangement also comprises a conduit extension that may be implemented as the metal tube extending a length from the outlet. In such electromagnetic pump arrangement, the first diameter is at least 2.8 times as large as the second diameter. As shown by equation (11), the length of the conduit extension is preferably smaller than one tenth of a circumference of the core times the number of windings that the metal tube is wound around the core. Also, as shown by equation (8), it is preferred that the length of the conduit extension is larger than 2.5 times the number of windings times the pipe diameter squared divided by the core diameter.

In accordance with the teachings herein, there is also provided a system for generating a liquid metal jet. The system comprises an electromagnetic pump arrangement as disclosed herein, as well as a jet nozzle configured to receive liquid metal from the outlet of the electromagnetic pump and to form a liquid metal jet from the received liquid metal. Further, the system may comprise a jet receiver arranged to receive the liquid metal jet, wherein the inlet of the electromagnetic pump is arranged to receive liquid metal from the jet receiver. The system may be implemented in an electron impact X-ray source, and thus further comprise an electron source configured to generate an electron beam for impacting the liquid metal jet in an interaction region so that X-ray radiation is emitted from the interaction region. Preferably, the system has a first ground connection point upstream, in relation to the liquid metal jet, from the jet nozzle and a second ground connection point downstream from the jet nozzle.

When the electromagnetic pump arrangement is used in an X-ray source, an electron beam is arranged to impact the liquid metal jet in an interaction region. X-ray radiation is generated by interactions between high energy electrons comprised in the electron beam and the material in the liquid metal jet. The electron beam is typically generated from electrons emitted from a cathode accelerated by a suitable potential. The electron beam may further be directed and focused by means of an electron optical arrangement.

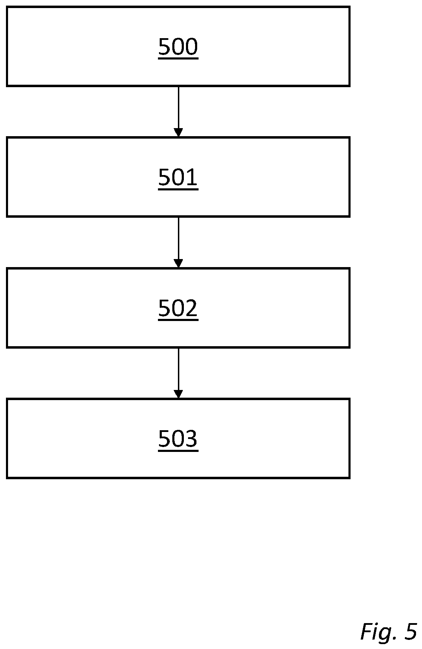

An exemplary method according to the invention will be described in connection with Fig. 5. A method for circulating liquid metal in a loop by means of an electromagnetic pump having an inlet and an outlet comprises applying 500 a driving voltage to the electromagnetic pump between the inlet and the outlet and limiting 501 a current flow from the outlet to the inlet through the loop. The step of limiting may comprise one or more of introducing a current limiting resistance in the loop, introducing a discontinuity in the flow of liquid metal within the loop, or diverting electrical current through a low-resistance current path. The method may further comprise collecting 502 liquid metal in a receiver located in a low-pressure chamber and pumping 503 liquid metal from the receiver to the electromagnetic pump using a pre-pump. In this further embodiment the step of limiting the current flow from the outlet to the inlet of the electromagnetic pump may comprise limiting flow of electrical current through the pre-pump.

## Claims

1. An electromagnetic pump arrangement configured for circulating a liquid metal, the arrangement comprising

   an electromagnetic pump comprising an inlet and an outlet;
   a conduit forming at least part of a path for the liquid metal to flow from the outlet to the inlet;
   a power supply configured to provide a driving voltage to the electromagnetic pump between the inlet and the outlet; and
   a current limiter configured to limit electrical current flowing from the outlet to the inlet through the conduit and the liquid metal.

2. The arrangement of claim 1, wherein the current limiter comprises a conduit extension between the outlet and a point at which the conduit is grounded.

3. The arrangement of claim 1 or 2, wherein the current limiter comprises an electrical restriction of the conduit.

4. The arrangement of any one of 1 to 3, wherein the current limiter comprises a discontinuous flow of the liquid metal.

5. The arrangement of claim 3 or 4, wherein the current limiter comprises

   a peristaltic pump arranged between the conduit and the inlet, and wherein the peristaltic pump comprises an electrically insulating tube, or
   an impeller arranged between the conduit and the inlet, and wherein the impeller is made from an electrically insulating material.

6. The arrangement of claim 3 or 4, wherein the current limiter comprises a droplet-generating nozzle arranged in the path for the liquid metal.

7. The arrangement of any one of the preceding claims, wherein the arrangement is connected to a ground potential at two locations along the path for the liquid metal.

8. A system for generating a liquid metal jet comprising:

   the electromagnetic pump arrangement according to anyone of claims 1 to 7;
   a jet nozzle arranged to receive liquid metal from the outlet and shape the liquid metal into the liquid metal jet;
   a jet receiver arranged to receive the liquid metal jet;
   wherein the inlet is arranged to receive liquid metal from the jet receiver.

9. The system of claim 8 further comprising an electron source configured to generate an electron beam impacting the liquid metal jet in an interaction region so that X-ray radiation is emitted from the interaction region.

10. The system of claim 8 or 9 further comprising a first ground connection point upstream of the jet nozzle and a second ground connection point downstream of the jet nozzle.

11. A method for circulating liquid metal in a loop by means of an electromagnetic pump having an inlet and an outlet, comprising

    applying a driving voltage to the electromagnetic pump between the inlet and the outlet; and
    limiting a current flow from the outlet to the inlet through the loop.

12. The method of claim 11, wherein limiting the current flow from the outlet to the inlet through the loop comprises introducing a discontinuous flow of the liquid metal through the loop.

13. The method of claim 11 or 12, wherein limiting the current flow from the outlet to the inlet through the loop comprises diverting electrical current through a low-resistance current path.

14. The method of any one of claims 11-13, wherein limiting the current flow from the outlet to the inlet through the loop comprises introducing a current-limiting resistance along the loop.

15. The method of any one of claims 11-14, comprising

    collecting liquid metal in a receiver located in a low-pressure chamber; and pumping liquid metal from the receiver to the electromagnetic pump using a pre-pump;
    wherein limiting the current flow from the outlet to the inlet of the electromagnetic pump comprises limiting flow of electrical current through the pre-pump.

*Fig. 1a*

Fig. 1b

Fig. 2

Fig. 3

Fig. 4

*Fig. 5*

Europäisches Patentamt
European Patent Office
Office européen des brevets

# EUROPEAN SEARCH REPORT

Application Number

EP 22 21 0856

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/057680 A1 (HEMBERG OSCAR [SE] ET AL) 8 March 2012 (2012-03-08) | 1,4,6,8,9,11,12 | INV. H02K44/04 |
| Y | * figures 2, 6 * <br> * paragraphs [0009], [0041], [0044] * | 5,7,10 | |
| Y | CN 109 686 710 A (TECHNICAL INST PHYSICS & CHEMISTRY CAS; UNIV CAS) 26 April 2019 (2019-04-26) <br> * figure 3 * <br> * paragraph [0017] * | 5 | |
| Y | US 2010/101934 A1 (SAYKALLY RICHARD J [US] ET AL) 29 April 2010 (2010-04-29) <br> * figure 4A * <br> * paragraph [0047] * | 7,10 | |

TECHNICAL FIELDS SEARCHED (IPC)

H02K

The present search report has been drawn up for all claims

| Place of search | Date of completion of the search | Examiner |
|---|---|---|
| The Hague | 3 May 2023 | Friedrich, Léo |

EPO FORM 1503 03.82 (P04C01)

## ANNEX TO THE EUROPEAN SEARCH REPORT
## ON EUROPEAN PATENT APPLICATION NO.

EP 22 21 0856

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2023

| Patent document cited in search report | | Publication date | Patent family member(s) | | Publication date |
|---|---|---|---|---|---|
| US 2012057680 | A1 | 08-03-2012 | CN | 102369587 A | 07-03-2012 |
| | | | EP | 2415065 A1 | 08-02-2012 |
| | | | EP | 2743963 A2 | 18-06-2014 |
| | | | US | 2012057680 A1 | 08-03-2012 |
| | | | US | 2014348302 A1 | 27-11-2014 |
| | | | WO | 2010112048 A1 | 07-10-2010 |
| CN 109686710 | A | 26-04-2019 | NONE | | |
| US 2010101934 | A1 | 29-04-2010 | US | 2010101934 A1 | 29-04-2010 |
| | | | WO | 2008127802 A2 | 23-10-2008 |

EPO FORM P0459

For more details about this annex : see Official Journal of the European Patent Office, No. 12/82